Europäisches Patentamt

European Patent Office

Office européen des brevets

(19)

(11) Numéro de publication: **0 285 507 B1**

# FASCICULE DE BREVET EUROPEEN

(45) Date de publication du fascicule du brevet:
24.10.90

(51) Int. Cl.⁵: **G01V 11/00, E21B 47/12**

(21) Numéro de dépôt: 88400733.7

(22) Date de dépôt: 25.03.88

(54) **Système de transmission de signaux entre un ensemble de réception descendu dans un puits et un laboratoire central de commande et d'enregistrement.**

(30) Priorité: 27.03.87 FR 8704365

(43) Date de publication de la demande:
05.10.88 Bulletin 88/40

(45) Mention de la délivrance du brevet:
24.10.90 Bulletin 90/43

(84) Etats contractants désignés:
DE GB IT NL

(56) Documents cités:
US-A- 3 309 657
US-A- 3 514 750
US-A- 3 773 109
US-A- 3 991 661

(73) Titulaire: INSTITUT FRANCAIS DU PETROLE, 4, Avenue de Bois-Préau, F-92506 Rueil-Malmaison Cédex(FR)

(72) Inventeur: Cretin, Jacques, 9, avenue de Villars, Parly 2 F-78150 Le Chesnay(FR)
Inventeur: Saussier, Daniel, 15, rue Ch. Elisabetville, Epone F-78410 Aubergenville(FR)

ACTORUM AG

## Description

La présente invention concerne un système de transmission de signaux entre un ensemble de réception de signaux descendu dans un puits et un ensemble central de commande et d'enregistrement disposé à l'extérieur du puits. Le système de transmission selon l'invention convient notamment pour un ensemble de réception de signaux comportant un dispositif d'acquisition adapté à collecter des signaux reçus par des capteurs disposés dans un puits, à les numériser et à les traduire sous une forme codée pour leur transmission.

Les mesures dans les forages sont effectuées par des capteurs contenus généralement dans au moins une sonde descendue depuis la surface au bout d'un câble électroporteur. La sonde comporte un ou plusieurs bras actionnés par des vérins hydrauliques associés à un système délivrant un fluide sous pression. L'ouverture de ces bras qui viennent s'ancrer dans la paroi du puits et ainsi immobiliser la sonde à une profondeur où des mesures doivent être effectuées, est commandée depuis l'installation en surface en utilisant différentes lignes conductrices du câble de support. On transmet depuis l'installation de surface, soit un courant électrique pour alimenter un moteur électrique et ainsi comprimer du fluide hydraulique par la manoeuvre des vérins, soit un signal électrique pour actionner des électro-vannes de commande. On peut utiliser aussi par exemple une sonde pourvue de bras d'ancrage actionnés par des ressorts maintenus en tension par des verrous. Des moyens hydrauliques, commandés par l'ouverture d'électro-vannes, permettent le déverrouillage et l'ouverture des bras. Ces électro-vannes sont commandés par transmission depuis l'installation de surface, de signaux électriques par une ligne conductrice du câble porteur.

De telles sondes sont décrites par exemple dans les brevets français n° 2.501.380 ou 2. 548.727.

Les différents capteurs disposés dans le puits pour effectuer des mesures, peuvent être disposés dans une sonde unique ou bien encore dans un ensemble de sondes comportant une sonde principale sous laquelle sont suspendues à des profondeurs différentes, une pluralité de sondes satellites. Un tel ensemble de sondes est décrit par exemple dans le brevet français 2.564.599.

On dispose ainsi d'un ensemble de capteurs répartis sur une profondeur pouvant atteindre plusieurs dizaines voire plusieurs centaines de mètres, ce qui permet par exemple d'effectuer des opérations de prospection sismique. Une source sismique étant déclenchée en surface ou dans un autre puits par exemple, on reçoit au moyen de différents capteurs les signaux acoustiques renvoyés par les discontinuités du sous-sol, et on exploite ces signaux de manière à obtenir des coupes sismiques du sous-sol.

La transmission à un laboratoire sismique en surface des différents signaux captés, peut s'effectuer sous une forme analogique lorsque le nombre de capteurs est relativement faible. Mais lorsque l'ensemble de réception comporte un nombre plus important (supérieur à 6 par exemple, compte tenu du type de câble employé dans la pratique) on utilise généralement une transmission numérisée et codée en adaptant la vitesse de transfert aux capacités des câbles de transmission supportant les sondes.

On connait par le brevet français 2.379.694 un système de transmission de signaux numérisés permettant de relier des sondes de puits contenant des capteurs de nature très diverse : acoustiques, nucléaires, etc, à un ensemble de commande disposé en surface. Toutes les données recueillies par différents capteurs sont numérisées et centralisées par un organe de contrôle disposé au voisinage. La liaison avec le dispositif central de commande et d'enregistrement disposé en surface, s'effectue par l'intermédiaire de modems connectés à des lignes de transmission du câble. La vitesse de transmission des signaux codés est adaptée aux possibilités du câble utilisé. Elle est généralement de l'ordre de quelques dizaines de kilobits/seconde et dépend du type de codage employé. C'est en général le débit de transmission que permettent les câbles de transmission utilisés pour relier les sondes de puits à une installation de surface.

Un des modèles de câble le plus communément employé comporte sept lignes parallèles. Six lignes sont réparties régulièrement autour d'une ligne centrale. Une gaine métallique réalisée sous la forme d'une tresse, est disposée à la périphérie du câble pour assurer sa tenue mécanique et supporter des efforts de traction. La transmission des signaux numérisés codés est effectuée en utilisant certaines lignes sur le pourtour de la ligne centrale.

Les méthodes de prospection développées actuellement pour accroître la vitesse d'exploration sismique des profils souterrains, conduisent à utiliser des dispositifs de réception complexes comportant un nombre important de récepteurs sismiques répartis le plus souvent dans plusieurs sondes étagées à différentes profondeurs, de manière à multiplier le nombre d'emplacements où l'on capte simultanément des ondes en vue de leur enregistrement. Le volume de données à transmettre augmente considérablement.

Dans certains cas où la durée d'acquisition des signaux est courte relativement à l'intervalle de temps entre deux cycles d'émission-réception, on peut envisager un stockage des données acquises dans un organe de mémorisation d'une des sondes et leur transmission différée vers un système d'enregistrement en surface. Mais le plus souvent l'acquisition des données est effectuée de manière presque continue.

C'est vrai particulièrement pour certaines applications en vibrosismique où les intervalles de temps d'interruption entre les périodes d'acquisition successives sont trop courts pour envisager une transmission différée. Il est donc impératif que les données soient transmises en temps réel et donc que le débit des câbles de transmission soit accru de façon considérable.

Le système selon l'invention évite les inconvénients ci-dessus énoncés.

Il permet de transmettre des signaux entre d'une part un ensemble de récepteurs de signaux descendu dans un puits et comportant un dispositif d'acquisition adapter à collecter des signaux captés, à les numériser et à les traduire sous une forme codée, et d'autre part un ensemble central de commande et d'enregistrement disposé à l'extérieur du puits, lé système comportant un câble multi-conducteurs pour supporter l'ensemble de réception et transmettre de l'énergie électrique ainsi que des signaux de commandes émis par l'ensemble central et des données émises par l'ensemble de récepteurs , et le câble comportant un conducteur central, une pluralité de conducteurs disposés autour de celui-ci et une gaine métallique. Il est caractérisé en ce qu'il comporte des moyens d'émission et de réception de signaux codés suivant un code bipolaire connectés entre le conducteur central et la gaine métallique pour la transmission de données numérisées à grand débit entre le dispositif d'acquisition et l'ensemble de commande et d'enregistrement.

Les moyens d'émission et de réception comportent par exemple un élément de synchronisation et un élément horloge pour cadencer la numérisation et la transmission des données entre le conducteur central et la gaine métallique à une fréquence supérieure à 100 kilobits par seconde.

Avec un tel agencement le débit d'informations transmises peut monter à 200 et même 300 kilobits/seconde, si l'on choisit un code de tranmission convenable et donc la transmission peut s'effectuer en temps réel au fur et à mesure de la numérisation.

On obtient donc un débit de transmission très supérieur, ce qui permet d'augmenter le nombre de capteurs sismiques utilisés sans allonger la durée de transmission des signaux collectés. On évite ainsi l'emploi des mémoires tampons que l'on utilise généralement pour pallier une vitesse de transmission insuffisante et surtout on rend possible les applications de vibro-sismique à longue durée d'émission où la transmission des données vers les systèmes d'enregistrement en surface, doit s'effectuer en temps réel.

Pour des applications autres que la prospection sismique où l'on doit recueillir un flot de données important, mais discontinu, l'accroissement du débit de transmission permet de réduire l'intervalle de temps entre deux périodes d'acquisition successives.

Il faut noter aussi que le débit de transmission qu'il est possible d'obtenir entre la ligne centrale et la gaine libère les autres lignes annulaires pour l'acheminement de courants électriques, de signaux de commande ou de synchronisation ou de multiplier dans la sonde le nombre des capteurs d'état mesurant la température, la pression, etc, qui peuvent disposer de lignes propres pour le transfert de données analogiques.

D'autres caractéristiques et avantages du système apparaîtront à la lecture de la description d'un mode de réalisation donné à titre d'exmple non limitatif, en se référant aux dessins annexés où :

- la figure 1 montre une sonde descendue dans un puits, suspendue à un câble électro-porteur,
- la figure 2 montre en coupe un câble de transmission électro-porteur généralement employé pour supporter les sondes de puits;
- la figure 3 représente un ensemble électronique permettant l'acquisition de mesures faites dans un puits et leur transmission sur un câble multi-lignes et;
- la figure 4 montre un exemple d'émetteur pour appliquer des signaux codés à la ligne centrale et à la gaine du câble.

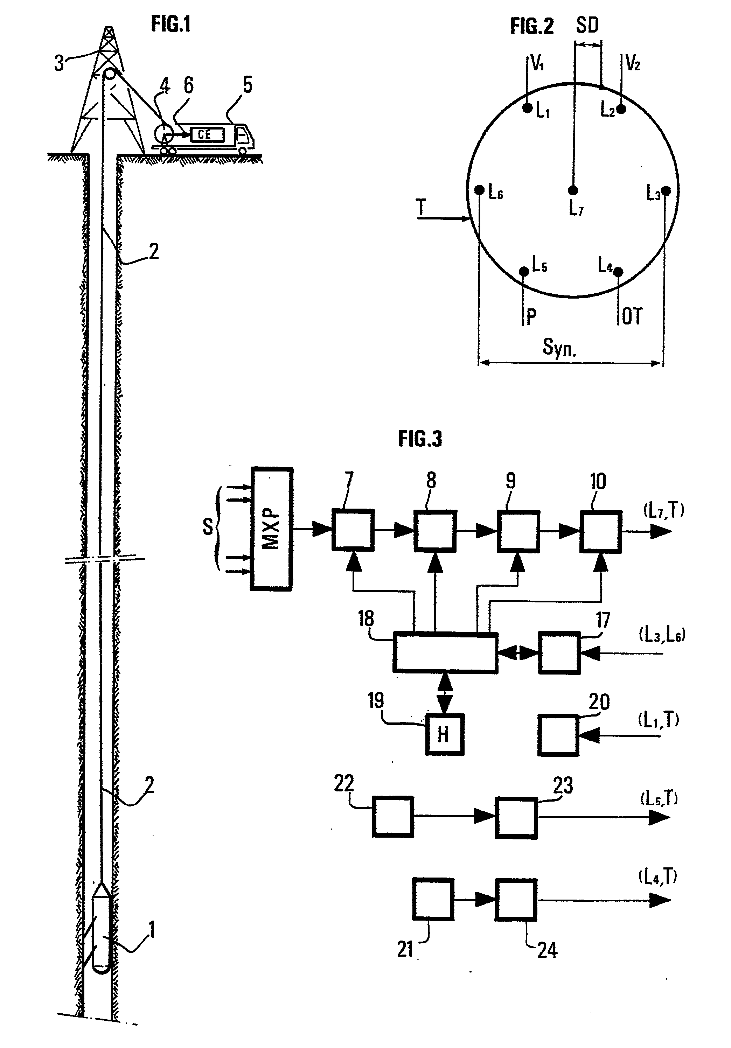

Le système selon l'invention permet la transmission de signaux entre un ensemble de réception de signaux contenu dans au moins une sonde 1 (fig. 1) qui est par exemple du type décrit dans les brevets français précités : n° 2.501.380, 2.548.727 ou 2.564.599. Cette sonde est suspendue par un câble électro-porteur 2 à une structure de support 3 disposée en surface et s'enroule sur le touret de stockage 4 d'un camion laboratoire 5. Le câble 2 utilisé est celui qui sert généralement pour descendre les sondes de puits. Il comporte par exemple (fig. 2) sept conducteurs ou lignes $L_1$ et $L_7$. Les six lignes $L_1$ à $L_6$ sont disposées régulièrement dans la section du câble à une même distance du centre où passe une lignes central $L_7$. A la périphérie, le câble comporte une gaine métallique T constituée généralement d'une tresse. Les sept lignes $L_1$ à $L_7$ du câble 1 enroulé sur le touret de stockage 4 (fig. 1) sont connectées par un câble de transmission 6 à un système de commande et d'enregistrement CE disposé dans le camion laboratoire 5.

De nombreux essais ont été menés pour essayer de trouver la combinaison de lignes assurant le meilleur débit d'information sur un câble de longueur variable (de 3 km à 7 km par exemple) et qui, pour les débits de transmission recherchés, était peu sensible aux variations des caractéristiques de transmission de signaux des câbles généralement utilisés. Divers agencements où des lignes sont connectées en parallèle par deux ou par trois ont permis d'accroître les capacités du câble. La combinaison qui s'est avérée la meilleure est celle où les signaux codés sont transmis entre le câble central $L_7$ et la gaine métallique extérieure T. On obtient couramment en utilisant cette combinaison particulière, des débits de 128 kilobits par seconde (kbits/s) quel que soit le câble et l'on peut en optimisant les facteurs de transmission atteindre des débits de 300 kbits/s et même plus sur des longueurs de câble pouvant atteindre plusieurs kilomètres, à condition d'utiliser un code de transmission bipolaire tel que le code HDB3 bien connu des spécialistes.

La combinaison de conducteurs électriques retenue est d'autant plus avantageuse qu'elle ne requière qu'un seul conducteur ($L_7$) associé à la tresse extérieure T et donc que les six autres lignes disponibles pour les courants d'alimentation électrique de l'appareillage contenus dans la sonde et la transmission de signaux.

Un exemple d'utilisation des différentes lignes du câble est montré sur la figure 3. Les signaux S mesurés par les capteurs de la sonde (des signaux sismiques par exemple) sont appliqués à un amplificateur à gain variable 7 tel que ceux décrits par exemple dans les demandes de brevet français publiées n° 2 593 004 ou 2 592 537 par l'intermédiaire généralement d'un multiplexeur MXP.

Les signaux amplifiés et échantillonnés sont appliqués à un convertisseur analogique-numérique 8. Les signaux numérisés correspondant sont codés par des circuits spécialisés 9 d'un type courant dans un code bipolaire tel que le code HDB3 bien connu des spécialistes, avant d'être appliqué à un élément d'émission 10 lequel est connecté à la ligne centrale $L_7$ et à la tresse périphérique T (fig. 2).

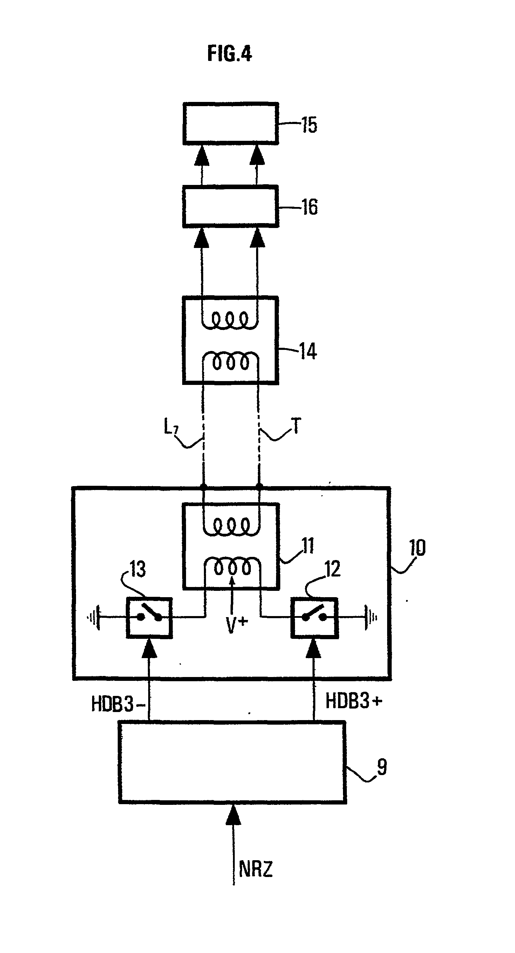

L'élément d'émission 10 comporte par exemple (fig. 4) un transformateur 11 dont les deux extrémités de l'enroulement primaire sont connectées à la masse par l'intermédiaire d'interrupteurs électroniques respectivement 12 et 13. Le point milieu de l'enroulement primaire est connecté à une tension électrique positive $V_+$. Les signaux de commande respectifs des deux interrupteurs, l'un positif, l'autre négatif, sont issus de l'élément de codage 9. L'enroulement secondaire du transformateur de tension 11 est connecté entre la ligne centrale $L_7$ et la tresse périphérique T. A l'autre extrémité du câble, un autre transformateur de tension 14 permet de prélever le signal transmis entre la ligne $L_7$ et la tresse T. Le signal reçu est appliqué à un récepteur-adaptateur 15 d'un type connu et ensuite à un décodeur HDB3 16 qui reconstitue le signal numérisé transmis.

Les autres lignes $L_1$ à $L_6$ du câble 2 sont disponibles pour d'autres usages. Par les lignes $L_3$ et $L_6$ par exemple, on transmet un signal de synchronisation. Le dispositif de réception dans le puits comporte un décodeur 17 (fig. 3) et un ensemble de synchronisation 18. A un rythme fixé par un élément horloge 19, cet ensemble engendre des signaux permettant la variation du gain de l'amplificateur 7 et la gestion en séquence des opérations de numérisation des signaux à mesurer et à transmettre. Les éléments électroniques du dispositif de réception sont alimentés par un générateur de tensions électriques 20 recevant de l'énergie électrique transmise depuis la surface par la ligne $L_1$ et la tresse extérieure T. Les lignes $L_4$ et $L_5$ sont disponibles pour d'autres signaux. On peut transmettre directement et en permanence au laboratoire de surface via les lignes $L_4$ et $L_5$, des signaux analogiques fournis par exemple par des éléments de mesure de la pression et de la température 21, 22 et mis en forme pour la transmission par des éléments d'interface 23, 24 ou bien en sens inverse des signaux de contrôle. De la même manière, le retour de ces signaux est assuré par l'intermédiaire de la tresse périphérique T. Par la lignes $L_2$, on alimente électriquement des moteurs pour la création d'énergie hydraulique nécessaire à l'ouverture des bras d'ancrage de la sonde ou bien on actionne des électro-vannes.

## Revendications

1. - Système de transmission de signaux entre d'une part un ensemble de récepteurs de signaux descendu dans un puits et comportant un dispositif d'acquisition adapté à collecter des signaux captés, à les numériser et à les traduire sous une forme codée, et d'autre part un ensemble central de commande et d'enregistrement disposé à l'extérieur du puits, le système comportant un câble multi-conducteurs (2) pour supporter l'ensemble de réception et transmettre de l'énergie électrique ainsi que des signaux numérisés traduisant des commandes émises par l'ensemble central et des données émises par l'ensemble de récepteurs, le câble comportant un conducteur central ($L_7$), une pluralité de conducteurs ($L_1$-$L_6$) disposés autour du conducteur central et une gaine métallique (T), caractérisé en ce qu'il comporte des moyens d'émission (10) et des moyens de réception (15) de signaux codés suivant un code bipolaire connectés entre le conducteur central ($L_7$) et la gaine métallique (T), pour la transmission de données numérisées à grand débit entre le dispositif d'acquisition et l'ensemble de commande et d'enregistrement.

2. - Système selon la revendication 1, caractérisé en ce que les moyens d'émission et de réception comportent un élément de synchronisation (17) et un élément horloge (18) pour cadencer la numérisation et la transmission des données entre le conducteur électrique central ($L_7$) et la gaine métallique (T) à une fréquence supérieure à 100 kilobits par seconde.

3. Système selon la revendication 1 ou 2, caractérisé en ce que la gaine métallique (T) constitue le conducteur électrique de retour pour au moins une partie des signaux transmis sur les autres lignes ($L_1$-$L_6$) du câble de transmission (2).

4. - Système selon la revendication 1, caractérisé en ce que les moyens d'émission de signaux codés connectés au conducteur central ($L_7$) et à la gaine métallique (T), comportent un ensemble d'acquisition de signaux analogiques (7, 8) pour transformer lesdits signaux en signaux numérisés, un élément de codage du type bipolaire (9) et un élément d'émission incluant un transformateur de tension (11) pour appliquer les signaux codés entre la ligne centrale ($L_7$) et la gaine extérieure (T) du câble de transmission.

5. - Système selon la revendication 1, caractérisé en ce que le câble comporte au moins un conducteur ($L_1$) pour l'alimentation électrique de l'ensemble de récepteurs, au moins un conducteur ($L_2$) pour l'alimentation électrique de moteurs et la commande d'électro-vannes, au moins un conducteur ($L_3$, $L_6$) pour la transmission de signaux de commande vers l'ensemble de réception de la sonde (1) et au moins un conducteur ($L_5$) pour la transmission directe de signaux de mesure.

## Patentansprüche

1. Signalübertragungssystem einerseits zwischen einer Anordnung von Signalempfängern, die in ein Bohrloch hinabgelassen ist und eine Datenerfassungseinrichtung umfaßt, die so ausgebildet ist, daß sie erfaßte Signale sammelt, sie digitalisiert und sie in einer codierten Form überträgt und andererseits einer zentralen Steuer- und Aufzeichnungsanordnung, die außerhalb des Bohrlochs angeordnet ist, wobei das System ein Mehrleiterkabel (2) umfaßt, welches die Empfängeranordnung trägt und elektrische Energie sowie digitalisierte Signale überträgt, welche Befehle umsetzen, die von der Zentralanordnung ausgesandt wurden sowie Daten, die von der Empfängeranordnung ausgesandt wurden, wobei das Kabel einen zentralen Leiter ($L_7$), eine Vielzahl um den zentralen Leiter herum angeordnete Leiter ($L_1$-$L_6$) sowie eine metallische Hülle (T) umfaßt, dadurch gekennzeichnet, daß es Sendemittel (10) und Empfängermittel (15) für entsprechend einem bipolaren Code codierte Signale umfaßt, die zwischen dem zentralen Leiter ($L_7$) und der metallischen Hülle (T) zur Übertragung von digitalisierten Daten bei großer Leistung bzw. Menge zwischen der Erfassungseinrichtung und der Steuer- und Aufzeichnungsanordnung verbunden sind.

2. System nach Anspruch 1, dadurch gekennzeichnet, daß die Sende- und Empfangsmittel ein Synchronisierelement (17) sowie ein Taktgeberelement (18) umfassen, um die Digitalisierung und die Übertragung der Daten zwischen dem zentralen elektrischen Leiter ($L_7$) und der metallischen Hülle (T) bei einer Frequenz von mehr als 100 Kilobits/sek. zu kadenzieren.

3. System nach Anspruch 1 oder 2, dadurch gekennzeichnet, daß die metallische Hülle (T) den elektrischen Rückführleiter für wenigstens einen Teil der Signale bildet, die auf die anderen Leitungen ($L_1$-$L_6$) des Transmissionskabels (2) übertragen wurden.

4. System nach Anspruch 1, dadurch gekennzeichnet, daß die Mittel zum Aussenden codierter Signale, die mit dem mittigen Leiter ($L_7$) und der metallischen Hülle (T) verbunden sind, eine Erfassungsanordnung für Analogsignale (7, 8) umfassen, um diese Signale in digitalisierte Signale umzuformen, ein Codierungselement vom bipolaren Typ (9) sowie ein Aussende- oder Ausgabeelement, das einen Spannungstransformator (11) einschließt, um die codierten Signale zwischen der zentralen Leitung (7) und der äußeren Hülle (T) des Übertragungskabels anzulegen.

5. System nach Anspruch 1, dadurch gekennzeichnet, daß das Kabel wenigstens einen Leiter ($L_1$) für die elektrische Versorgung der Empfängeranordnung, wenigstens einen Leiter ($L_2$) zur elektrischen Versorgung von Motoren sowie der Elektroventil- oder Magnetventilsteuerung, wenigstens einen Leiter ($L_3$, $L_6$) zur Übertragung von Steuersignalen gegen die Empfängeranordnung der Sonde (1) und wenigstens einen Leiter ($L_5$) zur direkten Übertragung von Meßsignalen umfaßt.

## Claims

1. System for transmitting signals between, on the one hand, a signal receiver assembly lowered into a well and including an acquisition device adapted for collecting signals picked up, digitizing them and translating them into a coded form and, on the other hand, a central control and recording unit disposed outside the well, the system incorporating a multiconductor cable (2) for supporting the receiver assembly and transmitting electrical energy as well as digitised signals translating commands transmitted by the central unit and data transmitted by the receiver assembly, the cable comprising a central conductor ($L_7$), a plurality of conductors ($L_1$-$L_6$) disposed about the central conductor and a metal sheath (T), characterised in that it comprises means for transmitting (10) and means for receiving (15) signals coded in accordance with a bipolar code, connected between the central conductor ($L_7$) and the metal sheath (T) to transmit digitised data at high speed between the acquisition device and the control and recording unit.

2. System as claimed in claim 1, characterised in that the transmission and reception means include a synchronisation element (17) and a clock element (18) for timing the digitisation and the transmission of data between the central electrical conductor ($L_7$) and the metal sheath (T) at a frequency greater than 100 kilobits per second.

3. System as claimed in claim 1 or 2, characterised in that the metal sheath (T) forms the electrical return conductor for at least a part of the signals transmitted over the other lines ($L_1$-$L_6$) of the transmission cable (2).

4. System as claimed in claim 1, characterised in that the means for transmitting coded signals connected to the central conductor ($L_7$) and to the metal sheath (T) include an analog signal acquisition unit (7, 8) for transforming the said signals into digitised signals, a coding element of the bipolar type (9) and a transmission element including a voltage transformer (11) for applying the coded signals between the central line ($L_7$) and the external sheath (T) of the transmission cable.

5. System as claimed in claim 1, characterised in that the cable includes at least one conductor ($L_1$) for supplying the receiver assembly with electric power, at least one conductor ($L_2$) for supplying motors with electric power and controlling solenoid valves, at least one conductor ($L_3$, $L_6$) for transmitting control signals to the probe receiver assembly (1) and at least one conductor ($L_5$) for the direct transmission of measurement signals.

EP 0 285 507 B1

**FIG.1**

**FIG.2**

Syn.

**FIG.3**

$(L_7,T)$

$(L_3,L_6)$

$(L_1,T)$

$(L_5,T)$

$(L_4,T)$

# FIG.4